# FASCICULE DE BREVET EUROPEEN

(11) **EP 3 655 640 B1**
(45) Date de publication et mention de la délivrance du brevet: **05.05.2021**
(21) Numéro de dépôt: 18749451.3
(22) Date de dépôt: 25.06.2018
(51) Int. Cl.: F02B 37/16, F02B 37/04, F02M 35/10, F02B 39/10

(54) **GROUPE MOTOPROPULSEUR AVEC MAINTIEN EN OPÉRATION D'UN COMPRESSEUR AUXILIAIRE EN PHASE DE PLEINE PUISSANCE**
KRAFTWERK MIT HILFSKOMPRESSOR IN BETRIEB IN DER VOLLLASTPHASE
POWERPLANT WITH AUXILIARY COMPRESSOR KEPT IN OPERATION IN FULL-POWER PHASE

(30) Priorité: 18.07.2017 FR 1756780
(43) Date de publication de la demande: 27.05.2020
(73) Titulaire: PSA Automobiles SA, 78300 Poissy (FR)
(72) Inventeur: NOVATI, Jean, 78420 Carrieres Sur Seine (FR)
(86) Numéro de dépôt international: PCT/FR2018/051532
(87) Numéro de publication internationale: WO 2019/016439

(56) Documents cités:
- EP-A1- 2 993 328
- EP-A1- 2 995 798
- EP-A1- 3 179 079
- WO-A1-99/17008

## Description

La présente invention concerne un groupe motopropulseur avec maintien en opération d'un compresseur auxiliaire en phase de pleine puissance. L'invention concerne les véhicules automobiles aussi bien à moteur thermique à essence ou diesel équipés d'un turbocompresseur et d'un compresseur auxiliaire.

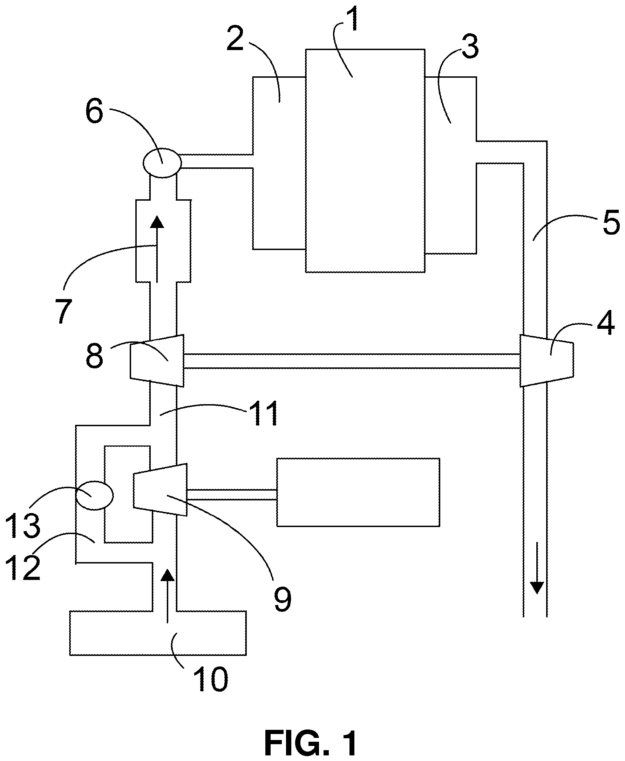

Comme il est montré à la figure 1 qui illustre un groupe motopropulseur du type à suralimentation selon l'état de la technique, cet ensemble comprend un moteur 1 associé à une turbine 4 et un compresseur 8 formant un turbocompresseur 4, 8. La turbine 4 est disposée en aval d'un collecteur d'échappement 3 à la sortie du moteur 1 dans une ligne d'échappement 5 tandis que le compresseur 8 est disposé en amont d'un collecteur d'admission d'air 2 ou répartiteur d'admission d'air au moteur 1 dans une ligne d'admission 11 d'air du moteur 1, une vanne papillon 6 étant positionnée en amont du collecteur d'admission 2.

La turbine 4 comprend une roue de turbine récupérant au moins partiellement une énergie cinétique créée dans les gaz d'échappement la traversant. La turbine 4 entraîne le compresseur 8 en étant solidaire de celui-ci par un axe, le compresseur 8 étant traversé par de l'air frais destiné à alimenter en air le moteur 1, air que le compresseur 8 comprime.

En amont du compresseur 8 du turbocompresseur 4, 8 se trouve un filtre à air 10 et en aval du compresseur 8, l'air qui est alors dénommé air de suralimentation est amené vers un refroidisseur d'air de suralimentation 7 pour refroidir l'air sortant du compresseur 8. Sur la ligne d'admission 11 d'air, la vanne papillon 6 régule le débit d'air dans le collecteur d'admission d'air 2 ou répartiteur du moteur 1 formant l'entrée d'air du moteur 1.

Le groupe motopropulseur comprend dans la ligne d'admission d'air un compresseur auxiliaire 9, avantageusement un compresseur électrique. Ce compresseur auxiliaire 9 peut être associé au compresseur 8 du turbocompresseur 4, 8 pour renforcer son action. C'est ce compresseur auxiliaire 9 qui sert à créer une surpression de durée limitée pour l'air en entrée d'air du moteur 1.

Il existe une branche de dérivation 12 entourant une branche principale de la ligne d'admission 11 d'air intégrant le compresseur auxiliaire 9. Une vanne de dérivation 13 pouvant être passive, notamment un clapet anti-retour évite de refouler de l'air vers le filtre à air 10 lorsque le compresseur auxiliaire 9 est activé. La vanne de dérivation 13 peut être aussi active, par exemple sous la forme d'une vanne pilotée. Cette vanne de dérivation 13 évite de refouler l'air vers le filtre à air 10 lorsque le compresseur auxiliaire 9 est activé.

Dans le cas d'une vanne de dérivation 13 pilotée, la vanne 13, le compresseur auxiliaire 9 et la vanne papillon 6 de l'air admis sont pilotés via un calculateur de l'unité de commande du groupe motopropulseur.

Lors des phases de fonctionnement du moteur thermique durant une phase atmosphérique, c'est-à-dire sans fonctionnement du turbocompresseur, la vanne papillon de l'air admis vient obturer partiellement l'air d'admission afin de créer une dépression dans le collecteur d'admission du moteur thermique. Dans cette phase de vie, la suralimentation générée par le compresseur du turbocompresseur en amont de la vanne papillon est négligeable. La pression en amont de la vanne papillon est donc proche de la pression ambiante, soit 100.000 Pascals ou 1 bar au niveau de la mer.

Lors d'une demande d'accélération du conducteur, la vanne papillon va s'ouvrir complètement pour laisser entrer la quantité d'air maximale dans la chambre de combustion et commencer une phase de suralimentation débutant par une phase transitoire. Cependant, au début de la phase transitoire, par exemple autour de 400 millisecondes, la pression dans le collecteur d'admission devient égale à la pression amont papillon soit 100.000 Pascals ou 1 bar. Ceci délivre un couple qui est dénommé « couple instantané ». Le couple va alors augmenter en partant de ce couple instantané jusqu'à rejoindre le couple de pleine charge atteint avec la pleine phase de suralimentation au voisinage de 300.000 Pascals ou 3 bars.

Il est connu d'utiliser le compresseur auxiliaire en complément du compresseur du turbocompresseur, avantageusement un compresseur auxiliaire électrique en début de phase transitoire avant la pleine obtention de la phase de suralimentation. Le compresseur auxiliaire électrique permet d'améliorer le temps de réponse en couple en s'activant dès le début de l'accélération. En apportant un complément de suralimentation très rapidement, notamment en moins de 350 millisecondes en aide au compresseur du turbocompresseur, le compresseur auxiliaire électrique permet de réduire le temps de réponse global du système de suralimentation.

Lorsque le moteur thermique fonctionne sur son point de puissance maximum en phase de suralimentation, le compresseur auxiliaire est arrêté ou tourne au ralenti. La totalité du débit d'air s'écoule depuis le filtre à air vers le turbocompresseur. La vanne de dérivation, qu'elle soit pilotée ou passive, va alors générer une perte de charge. La dépression créée par cette perte de charge en entrée du turbocompresseur va alors dégrader le remplissage du moteur en air et réduire la puissance du moteur.

Les pertes de charge au niveau de la vanne de dérivation augmentent proportionnellement en fonction du carré du débit d'air au moteur. Elles sont donc les plus importantes sur le point de puissance maximale du moteur thermique. Ces pertes de charge pourraient être significativement réduites en abaissant le débit d'air qui s'écoule au travers de la vanne de dérivation.

Le document FR-A-2 855 215 décrit un procédé de mise en oeuvre d'un moteur à combustion interne équipé d'un compresseur électrique faisant office de compresseur auxiliaire. Le compresseur auxiliaire est activé pendant la phase de démarrage du moteur. Le compresseur auxiliaire peut également être activé après un temps prédéterminé écoulé à partir du démarrage du moteur, ou avant la montée en vitesse du moteur, ou pendant la phase de réchauffage d'un dispositif de post-traitement, notamment un catalyseur. Le compresseur auxiliaire est couplé à un turbocompresseur de gaz d'échappement. On désactive le compresseur auxiliaire en fonction d'une charge requise ou d'un point de fonctionnement requis.

EP2993328A1 décrit un autre procédé de mise en œuvre d'un moteur à combustion interne équipé d'un compresseur électrique faisant office de compresseur auxiliaire.

Il s'ensuit de cet enseignement qu'il est connu d'utiliser un compresseur auxiliaire en complément du compresseur du turbocompresseur, ceci essentiellement au début d'une phase de suralimentation. La pratique commune est d'arrêter ou de faire tourner le compresseur auxiliaire au ralenti une fois le transitoire initial de la phase de suralimentation terminée. Ce document ne donne aucune indication quant à la réduction des pertes de charge dans la ligne d'admission d'air à puissance maximale du moteur.

Le problème à la base de la présente invention est d'augmenter la puissance délivrée par un groupe motopropulseur en phase de suralimentation à puissance maximale, un compresseur auxiliaire étant présent dans la ligne d'admission d'air du moteur.

A cet effet la présente invention concerne un procédé de diminution d'une perte de charge dans une ligne d'admission d'air d'un moteur thermique d'un groupe motopropulseur d'un véhicule automobile présentant un compresseur d'un turbocompresseur et un compresseur auxiliaire dans la ligne d'admission d'air, le groupe fonctionnant, d'une part, dans une phase de fonctionnement atmosphérique et, d'autre part, dans une phase de fonctionnement de suralimentation dans laquelle le turbocompresseur et le compresseur auxiliaire sont actifs lors d'une émission d'une demande de couple moteur, le compresseur auxiliaire étant arrêté ou fonctionnant au ralenti lors d'un dépassement d'un seuil prédéterminé de puissance maximale du moteur, un débit d'air dans la ligne d'admission se faisant alors majoritairement en dérivation du compresseur auxiliaire , caractérisé en ce que, sur demande du conducteur du véhicule, le compresseur auxiliaire est maintenu en opération lors du dépassement du seuil prédéterminé, le débit d'air dans la ligne d'admission se faisant majoritairement par le compresseur auxiliaire.

L'effet technique est une diminution des pertes de charge dans la ligne d'admission et donc une augmentation de la puissance délivrée par le groupe motopropulseur, ceci en maintenant en opération le compresseur auxiliaire.

Il était connu de l'état de la technique de faire fonctionner un compresseur auxiliaire en début de phase de suralimentation. Cependant, ce compresseur était arrêté ou tournait au ralenti à forte puissance délivrée, étant donné qu'il n'assurait plus un surplus de compression requis dans ces conditions et qu'en plus il consommait de l'énergie. Pour un compresseur auxiliaire électrique, ce qui n'est pas limitatif, quand alimenté électriquement par un alternateur, l'alimentation du compresseur auxiliaire diminuait la puissance délivrée par le groupe motopropulseur et quand alimenté électriquement par une batterie, l'alimentation du compresseur auxiliaire diminuait la charge de la batterie inutilement.

Il y avait un fort préjugé à maintenir en opération un compresseur auxiliaire dans ces conditions. Les essais ont cependant montrés que le maintien en opération du compresseur auxiliaire présentait l'avantage de diminuer les pertes de charge dans la branche de dérivation du compresseur auxiliaire, ce qui est la raison principale de son maintien en opération et que cette fonction de diminution des pertes de charge est totalement différente de sa fonction de compression auxiliaire. Le compresseur auxiliaire est ainsi utilisé pour augmenter la puissance maximale du moteur en réduisant cette perte de charge, ce qui n'était pas sa fonction première.

Avec mise en oeuvre du procédé selon la présente invention, la puissance maximale du groupe motopropulseur pourrait être augmentée d'environ 3% par rapport aux stratégies conventionnellement utilisées sur les moteurs équipés de compresseur auxiliaire, avantageusement électrique.

Avantageusement, le seuil prédéterminé de puissance maximale du moteur est défini par une condition sur une consigne de couple devant être supérieure à un seuil de consigne de couple et une condition sur un régime moteur devant être supérieur à un seuil de régime moteur, les seuils de consigne de couple et de régime moteur étant calibrables, une demande du conducteur n'étant pas exécutée si ces deux conditions ne sont pas réunies.

Le seuil prédéterminé de puissance maximale du moteur peut ainsi être complexe et comporter deux seuils pour des paramètres différents. La consigne de couple et le régime moteur doivent suffisamment être hauts pour nécessiter une augmentation de puissance. Ceci permet un contrôle de la demande de puissance du conducteur afin qu'elle ne soit pas remplie si cela n'est pas nécessaire. La demande de puissance du conducteur peut se faire par un moyen autre qu'un appui sur la pédale d'accélérateur pour être bien identifiée.

En effet, mettre en œuvre le procédé pour toutes les portions de phases de suralimentation pour lesquelles le compresseur auxiliaire est arrêté n'est pas nécessaire et de plus coûteux du fait de l'utilisation du compresseur auxiliaire. Cette mise en œuvre est cependant fortement souhaitable lors d'une conduite sportive dans certaines conditions de roulage.

C'est le conducteur qui peut décider de la mise en œuvre du procédé selon l'invention en affichant sa demande pour une conduite sportive par un moyen quelconque de communication avec une unité de commande du groupe motopropulseur, sa demande étant confirmée ou non par le suivi de la consigne de couple et du régime moteur.

Avantageusement, quand le compresseur auxiliaire est maintenu en opération, un débit d'air total dans la ligne d'admission se divise en 80% passant par le compresseur auxiliaire et 20% passant en dérivation du compresseur auxiliaire tandis que, quand le compresseur auxiliaire est arrêté ou fonctionne au ralenti, le débit d'air total dans la ligne d'admission se divise en moins de 20% passant par le compresseur auxiliaire et en plus de 80% passant en dérivation du compresseur auxiliaire.

Il est reconnaissable que le débit en dérivation du compresseur auxiliaire est notoirement diminué quand le compresseur auxiliaire est maintenu en opération que quand le compresseur auxiliaire est arrêté. Les pertes de charge en dérivation du compresseur auxiliaire en sont notoirement diminuées.

L'invention concerne un groupe motopropulseur de véhicule automobile comprenant un moteur thermique avec une entrée d'air dans laquelle débouche une ligne d'admission d'air, le groupe motopropulseur comportant un turbocompresseur comprenant une turbine et un compresseur d'air intégré dans la ligne d'admission d'air, la ligne d'admission comprenant aussi un compresseur auxiliaire de surpression d'air avec une branche de la ligne montée en dérivation du compresseur auxiliaire, le groupe motopropulseur mettant en œuvre un tel procédé en comprenant une unité de commande pilotant un arrêt ou une activation du compresseur auxiliaire, caractérisé en ce que l'unité de commande comprend des moyens de suivi d'une puissance du moteur, des moyens de mémorisation d'un seuil prédéterminé de puissance maximale et des moyens de comparaison de la puissance suivie avec le seuil prédéterminé de puissance maximale, des moyens de réception d'une commande d'augmentation de puissance émise par un conducteur du véhicule et des moyens de maintien en opération du compresseur auxiliaire quand le seuil prédéterminé est dépassé et quand la commande est reçue.

Comme précédemment mentionné, le seuil prédéterminé de puissance maximale peut comprendre deux seuils de paramètres de puissance comme un seuil de consigne de couple et un seuil de régime moteur.

Un tel groupe motopropulseur n'a aucun impact sur le coût de fabrication, étant donné qu'il ne nécessite l'ajout d'aucun élément additionnel comme un ou des capteurs et/ou un ou des actionneurs supplémentaires. Seule une modification du logiciel de l'unité de commande est nécessaire.

Avantageusement, la branche de dérivation part en amont d'une branche principale de ligne d'admission intégrant le compresseur auxiliaire et débouche en aval du compresseur auxiliaire, la branche de dérivation comprenant une vanne de dérivation ou un clapet anti-retour, la vanne de dérivation étant pilotée par l'unité de commande.

Avantageusement, le compresseur auxiliaire est positionné en amont ou en aval du compresseur du turbocompresseur dans la ligne d'admission d'air.

Avantageusement, le compresseur auxiliaire est un compresseur électrique. La plupart des compresseurs auxiliaires sont électriques et permettent d'augmenter la pression dans la ligne d'admission d'air de l'ordre de 50.000 Pascals ou 500 mbars.

L'invention concerne aussi un véhicule automobile caractérisé en ce qu'il comprend un tel groupe motopropulseur.

Avantageusement, l'unité de commande du groupe motopropulseur est reliée à un organe de sélection actionné par le conducteur du véhicule commandant une phase de suralimentation à pleine puissance sans maintien en opération du compresseur auxiliaire ou une phase de suralimentation à pleine puissance et à conduite sportive avec maintien en opération du compresseur auxiliaire.

Le procédé selon l'invention a pour inconvénient de consommer un surplus d'énergie électrique pour alimenter le compresseur auxiliaire lorsque le moteur thermique fonctionne en phase de suralimentation à puissance élevée. La mise en œuvre du procédé pourrait donc être activée sur demande du conducteur pour limiter ses effets sur la consommation du véhicule. La voiture pourrait par exemple être équipée d'un bouton « mode sport » permettant d'activer la mise en œuvre du procédé, cette demande étant aisément détectable par l'unité de commande du groupe motopropulseur.

Avantageusement, quand le compresseur auxiliaire est un compresseur électrique, le compresseur électrique est alimenté électriquement en étant raccordé directement à une batterie présente dans le véhicule au moins pendant son maintien en opération, sous réserve que la batterie présente un niveau de charge supérieur à un seuil minimal déterminé par une unité de contrôle de la batterie communiquant avec l'unité de commande.

Une alimentation électrique du compresseur électrique par l'alternateur du véhicule entraînerait une diminution de la puissance, ce qui diminuerait les avantages obtenus par la présente invention. Il est donc préférable que l'alimentation du compresseur électrique se fasse par la batterie, sous réserve que son état de charge le permette.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un groupe motopropulseur turbocompressé comprenant une ligne d'admission d'air en entrée du moteur comprenant un compresseur de turbocompresseur ainsi qu'un compresseur auxiliaire avec une branche montée en dérivation du compresseur auxiliaire, un procédé selon la présente invention pouvant être mis en œuvre pour ce groupe motopropulseur,

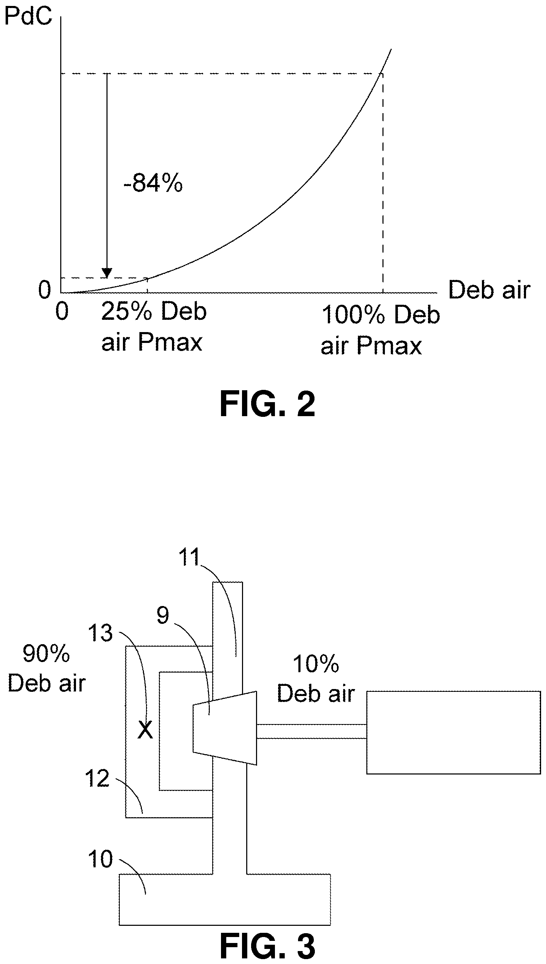

- la figure 2 représente une courbe de perte de charge en fonction du débit d'air dans le compresseur auxiliaire, montrant que la perte de charge est plus grande à 25% de débit maximal dans le compresseur auxiliaire qu'à 100%,

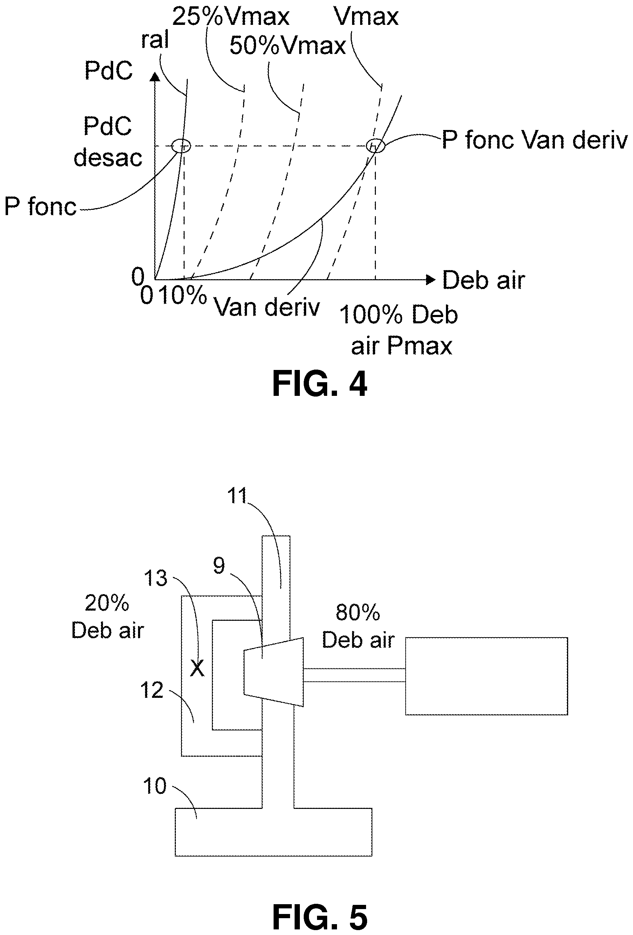

- les figures 3 et 5 montrent un compresseur auxiliaire avec une branche de dérivation de la ligne d'admission d'air autour du compresseur auxiliaire pour des débits respectivement de 90% dans la branche de dérivation et 10% dans le compresseur auxiliaire pour la figure 3 et de 20% dans la branche de dérivation et 80% dans le compresseur auxiliaire pour la figure 5, ce dernier cas étant obtenu lors du maintien en opération du compresseur auxiliaire lors de la mise en œuvre du procédé selon la présente invention,

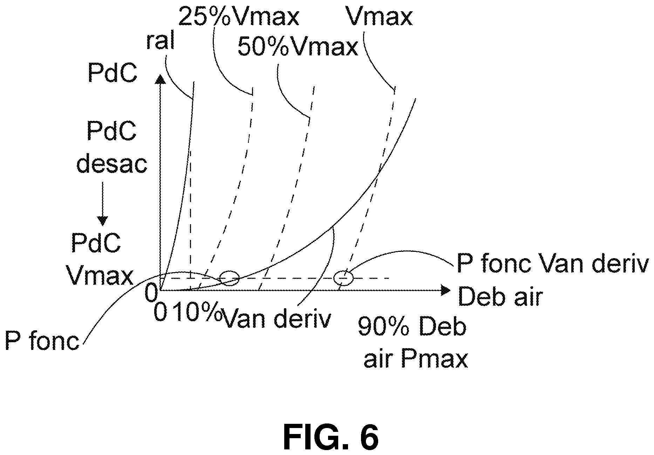

- les figures 4 et 6 montrent diverses courbes de perte de charge en fonction du débit d'air dans une ligne d'admission d'air de moteur thermique turbocompressé obtenues respectivement avec les débits de la figure 3 et les débits de la figure 5.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées. Dans ce qui va suivre, les termes amont et aval sont à prendre par rapport à un flux d'air circulant dans la ligne d'admission d'air du filtre à air vers l'entrée du moteur.

En se référant à nouveau la figure 1, dont certaines caractéristiques vont être reprises mais dont toutes les autres caractéristiques préférentielles ont été décrites dans la partie introductive de la présente demande, l'invention s'applique à un groupe motopropulseur de véhicule automobile comprenant un moteur 1 thermique avec une entrée d'air 2 dans laquelle débouche une ligne d'admission 11 d'air. Le groupe motopropulseur comporte un turbocompresseur 4, 8 comprenant une turbine 4 et un compresseur 8 d'air intégré dans la ligne d'admission 11 d'air.

De manière connue, la ligne d'admission 11 comprend aussi un compresseur auxiliaire 9 de surpression d'air avec une branche 12 de la ligne 11 montée en dérivation du compresseur auxiliaire 9. Le groupe motopropulseur comprend une unité de commande pilotant un arrêt ou une activation du compresseur auxiliaire 9 de même que l'ouverture de la vanne papillon 6 régulant le débit d'air dans le collecteur d'admission d'air 2 ou répartiteur entre des phases atmosphériques et des phases de suralimentation.

Selon l'état de la technique le compresseur auxiliaire 9 fonctionne donc en début de phase de suralimentation et est après arrêté ou tourne au ralenti. Lorsque le moteur thermique fonctionne sur son point de puissance maximale, le compresseur électrique est donc normalement désactivé ou piloté à son régime de ralenti.

Dans cette configuration la quasi-totalité du débit passe par la branche de dérivation 12 qui présente fréquemment une vanne de dérivation 13. Or cette vanne de dérivation 13 entraîne des pertes de charge conséquentes au niveau de la ligne d'admission 11. Les pertes de charge au niveau de la vanne de dérivation 13 augmentent proportionnellement en fonction du carré du débit d'air vers le moteur.

Les pertes de charge sont donc les plus importantes sur le point de puissance du moteur thermique. Ces pertes de charge pourraient être significativement réduites en abaissant le débit d'air qui s'écoule au travers de la branche de dérivation 12 en général et de la vanne de dérivation 13 en particulier.

Le compresseur auxiliaire 9 est arrêté ou tourne au ralenti pour des puissances du moteur élevées une fois qu'un transitoire plus ou moins long entre une phase atmosphérique et une phase de suralimentation est terminé. Il s'ensuit que la majorité du débit d'air passe par la branche de dérivation 12 quand le compresseur auxiliaire 9 est arrêté ou tourne au ralenti.

La figure 2 montre la perte de charge PdC en fonction du débit d'air Deb air dans un compresseur auxiliaire 9 dans une configuration comme il est montré aux figures 3 et 5. Pour des débits d'air inférieurs à 25% du débit d'air à la puissance maximale du moteur soit 25% Deb air Pmax, il se crée une perte de charge de 16% tandis que pour 100% du débit d'air à la puissance maximale soit 100% Deb air Pmax, il n'y a plus de perte de charge PdC.

Pour éviter cela, la présente invention concerne un procédé de diminution d'une perte de charge dans une ligne d'admission 11 d'air d'un moteur thermique d'un groupe motopropulseur comme précédemment décrit.

Le groupe motopropulseur fonctionne, d'une part, dans une phase de fonctionnement atmosphérique et, d'autre part, dans une phase de fonctionnement de suralimentation dans laquelle le turbocompresseur 4, 8 et le compresseur auxiliaire 9 sont actifs lors d'une émission d'une demande de couple moteur.

Selon l'état de la technique, le compresseur auxiliaire 9 est arrêté ou fonctionne au ralenti lors d'un dépassement d'un seuil prédéterminé de puissance maximale du moteur, par exemple à 60% de la puissance maximale du moteur. Un débit d'air dans la ligne d'admission 11 se fait alors majoritairement en dérivation du compresseur auxiliaire 9 par la branche de dérivation 12 avec une perte de charge importante comme montré à la figure 2.

La présente invention prévoit que, sur demande du conducteur du véhicule, le compresseur auxiliaire 9 soit maintenu en opération lors du dépassement du seuil prédéterminé de puissance maximale. Le débit d'air dans la ligne d'admission 11 se fait majoritairement par le compresseur auxiliaire 9 et la perte de charge est diminuée par rapport à une perte de charge existante quand le débit passe par la branche de dérivation 12.

La présente invention permet d'augmenter la puissance maximale du moteur thermique en utilisant une stratégie innovante de pilotage du compresseur auxiliaire 9. Le compresseur auxiliaire 9 est activé lorsque le moteur fonctionne sur son point de puissance afin de réduire les pertes de charge dans la ligne d'admission 11. La puissance du moteur sera ainsi augmentée tant que le compresseur auxiliaire 9 sera activé.

Le seuil prédéterminé de puissance maximale du moteur peut être défini par une condition sur une consigne de couple devant être supérieure à un seuil de consigne de couple et une condition sur un régime moteur devant être supérieur à un seuil de régime moteur, par exemple un seuil de couple à 90% du couple maximum, aussi bien en carburant essence qu'en Diesel. Les seuils de consigne de couple et de régime moteur peuvent être calibrables, une demande du conducteur n'étant pas exécutée si ces deux conditions de consigne de couple minimale et de régime moteur minimal ne sont pas réunies, par un seuil de régime à 5.500 tr/mn en essence et 4.000 tr/mn en Diesel.

Quand le compresseur auxiliaire 9 est arrêté ou fonctionne au ralenti, le débit d'air Deb air total dans la ligne d'admission 11 se divise en moins de 20% passant par le compresseur auxiliaire 9 et en plus de 80% passant en dérivation du compresseur auxiliaire 9. Un exemple est montré à la figure 3 avec 10% du débit Deb air passant par le compresseur auxiliaire 9 et 90% du débit passant par la branche de dérivation 12.

Quand le compresseur auxiliaire 9 est maintenu en opération, un débit d'air Deb air total dans la ligne d'admission 11 peut se diviser en 80% passant par le compresseur auxiliaire 9 et 20% passant en dérivation du compresseur auxiliaire 9. Ceci est montré à la figure 5.

Les figures 4 et 6 montrent les pertes de charge dans les configurations respectives des figures 3 et 5. Ces figures montrent la perte de charge PdC en fonction du débit d'air Deb air pour des débits compris entre 10 et 100% du débit d'air à la puissance maximale ou Deb air Pmax. Les courbes en pointillés sont tracées pour un compresseur auxiliaire 9 tournant au ralenti ral, à 25% de sa vitesse maximale 25%Vmax, à 50% de sa vitesse maximale 50%Vmax et à sa vitesse maximale Vmax.

Pour les figures 4 et 6 prise en combinaison avec les figures 3 et 5, la courbe en trait plein est la courbe de perte de charge Van deriv à la vanne de dérivation 13 de la branche de dérivation 12 avec un point de fonctionnement P fonc Van deriv de la vanne de dérivation 13. A la figure 4, il est montré une perte de charge sans mise en œuvre du procédé selon l'invention PdC desac avec un point de fonctionnement P fonc.

A la figure 6, pour une mise en œuvre du procédé selon la présente invention, le point de fonctionnement P fonc correspond à une perte de charge PdC plus faible que celui de la figure 4. La flèche descendante partant de PdC desac montré à la figure 4 et reprise à la figure 6 en direction de la perte de charge à la vitesse maximale PdC Vmax du compresseur auxiliaire 9 montre la diminution de perte de charge grâce à la mise en œuvre du procédé selon la présente invention.

L'activation du compresseur auxiliaire 9 sur un point de puissance élevé du moteur permet de modifier la répartition du débit d'air entre la vanne de dérivation 13 et le compresseur électrique. Plus la vitesse du compresseur auxiliaire 9 va être élevée, plus le débit d'air au travers de la vanne de dérivation 13 va être réduit.

Les figures 4 et 6 présentent donc l'évolution des pertes de charge avec une répartition des débits d'air entre la branche de dérivation 12 et le compresseur auxiliaire 9 respectivement montrés aux figures 3 et 5. Il peut être constaté qu'en activant le compresseur auxiliaire 9, on réduit significativement le débit d'air au niveau de la vanne de dérivation 13 et donc les pertes de charge associées.

La réduction des pertes de charge sur la ligne d'admission 11 va permettre d'accroître la puissance du moteur. Les simulations réalisées sur des moteurs montrent qu'une amélioration de 10 mbar permet d'augmenter de 1,4 kW la puissance du moteur. Avec cette stratégie de pilotage du compresseur auxiliaire 9, la puissance du moteur pourrait ainsi être augmentée de 10 kW avec une vanne de dérivation 13 ayant une perte de charge de 80 mbar au débit d'air de puissance maximale du moteur thermique.

Dans le groupe motopropulseur selon l'invention qui reprend les caractéristiques précédemment mentionnées, principalement le compresseur auxiliaire 9 et la branche de dérivation 12 ainsi que l'unité de commande pilotant la ligne d'admission 11 d'air, l'unité de commande comprend des moyens de suivi d'une puissance du moteur, des moyens de mémorisation d'un seuil prédéterminé de puissance maximale qui peut concerner respectivement deux paramètres de puissance que sont la consigne de couple et le régime moteur et des moyens de comparaison de la puissance suivie avec le seuil prédéterminé de puissance maximale.

L'unité de commande comprend aussi des moyens de réception d'une commande d'augmentation de puissance émise par un conducteur du véhicule et des moyens de maintien en opération du compresseur auxiliaire 9 quand le seuil prédéterminé est dépassé et quand la commande émise par le conducteur est reçue.

Il y a donc deux conditions principales pour la mise en œuvre du procédé : une condition de demande du conducteur d'une conduite plus sportive avec une puissance du moteur accrue et une condition, pouvant être multiple, concernant la puissance du moteur en vigueur qui doit être relativement élevée. Cette condition peut être appréciée par le suivi d'une consigne de couple et d'un régime moteur relativement élevés et représentatifs d'une puissance maximale du moteur requise.

Comme il est visible aux figures 1, 3 et 5, la branche de dérivation 12 peut partir en amont d'une branche principale de ligne d'admission 11 intégrant le compresseur auxiliaire 9 et déboucher en aval du compresseur auxiliaire 9, avantageusement directement en aval du compresseur auxiliaire 9 sans interposition d'un élément entre le débouché et le compresseur auxiliaire 9.

La branche de dérivation 12 peut comprendre une vanne de dérivation 13 en tant que vanne active ou un clapet anti-retour en tant que vanne passive. La vanne de dérivation 13 en tant que vanne active peut être pilotée par l'unité de commande. Une telle vanne de dérivation 13 évite un refoulement d'air vers le filtre à air 10 lorsque le compresseur auxiliaire 9 est activé. Le compresseur auxiliaire 9 et la vanne papillon 6 peuvent être pilotés via un calculateur de l'unité de commande.

Le compresseur auxiliaire 9 et sa branche de dérivation 12 associée peuvent être positionnés en amont ou en aval du compresseur 8 du turbocompresseur 4, 8 dans la ligne d'admission 11 d'air. Le compresseur auxiliaire 9 peut être un compresseur électrique.

L'invention concerne aussi un véhicule automobile comprenant un groupe motopropulseur tel que précédemment décrit. Pour la commande de la mise en œuvre du procédé selon l'invention par le conducteur, l'unité de commande du groupe motopropulseur peut être reliée à un organe de sélection actionné par le conducteur du véhicule commandant une phase de suralimentation à pleine puissance.

Il existe une sélection possible entre, d'une part, une phase de suralimentation à puissance élevée avec un arrêt ou une marche au ralenti du compresseur auxiliaire 9 auquel cas il n'y a pas de gain additionnel de puissance par diminution des pertes de charge dans la branche de dérivation 12 ou, d'autre part une phase de suralimentation à pleine puissance et à conduite sportive avec maintien en opération du compresseur auxiliaire 9, auquel cas il y a un gain additionnel.

Quand le compresseur auxiliaire 9 est un compresseur électrique, le compresseur électrique peut être alimenté électriquement en étant raccordé directement à une batterie présente dans le véhicule au moins pendant son maintien en opération. En effet, utiliser un alternateur pour l'alimentation du compresseur auxiliaire 9 serait contre-productif en diminuant la puissance du groupe motopropulseur et irait à l'encontre de ce que produit la mise en œuvre du procédé selon l'invention. Une alimentation électrique directement à partir de la batterie assure que le couple moteur ne sera pas réduit par l'augmentation des pertes à l'alternateur servant à alimenter le compresseur auxiliaire 9 électrique.

L'alimentation du compresseur auxiliaire 9 électrique par la batterie s'effectue sous réserve que la batterie présente un niveau de charge supérieur à un seuil minimal déterminé par une unité de contrôle de la batterie communiquant avec l'unité de commande.

L'invention n'est nullement limitée aux modes de réalisation décrits et illustrés qui n'ont été donnés qu'à titre d'exemples.

## Revendications

1. Procédé de diminution d'une perte de charge dans une ligne d'admission (11) d'air d'un moteur thermique d'un groupe motopropulseur d'un véhicule automobile présentant un compresseur (8) d'un turbocompresseur (4, 8) et un compresseur auxiliaire (9) dans la ligne d'admission (11) d'air, le groupe fonctionnant, d'une part, dans une phase de fonctionnement atmosphérique et, d'autre part, dans une phase de fonctionnement de suralimentation dans laquelle le turbocompresseur (4, 8) et le compresseur auxiliaire (9) sont actifs lors d'une émission d'une demande de couple moteur, le compresseur auxiliaire (9) étant arrêté ou fonctionnant au ralenti lors d'un dépassement d'un seuil prédéterminé de puissance maximale du moteur, un débit d'air dans la ligne d'admission (11) se faisant alors majoritairement en dérivation du compresseur auxiliaire (9), **caractérisé en ce que**, sur demande du conducteur du véhicule, le compresseur auxiliaire (9) est maintenu en opération lors du dépassement du seuil prédéterminé, le débit d'air dans la ligne d'admission (11) se faisant majoritairement par le compresseur auxiliaire (9).

2. Procédé selon la revendication précédente, dans lequel le seuil prédéterminé de puissance maximale du moteur est défini par une condition sur une consigne de couple devant être supérieure à un seuil de consigne de couple et une condition sur un régime moteur devant être supérieur à un seuil de régime moteur, les seuils de consigne de couple et de régime moteur étant calibrables, une demande du conducteur n'étant pas exécutée si ces deux conditions ne sont pas réunies.

3. Procédé selon l'une quelconque des revendications 1 ou 2, dans lequel, quand le compresseur auxiliaire (9) est maintenu en opération, un débit d'air (Deb air) total dans la ligne d'admission (11) se divise en 80% passant par le compresseur auxiliaire (9) et 20% passant en dérivation du compresseur auxiliaire (9) tandis que, quand le compresseur auxiliaire (9) est arrêté ou fonctionne au ralenti, le débit d'air (Deb air) total dans la ligne d'admission (11) se divise en moins de 20% passant par le compresseur auxiliaire (9) et en plus de 80% passant en dérivation du compresseur auxiliaire (9).

4. Groupe motopropulseur de véhicule automobile comprenant un moteur (1) thermique avec une entrée d'air (2) dans laquelle débouche une ligne d'admission (11) d'air, le groupe motopropulseur comportant un turbocompresseur (4, 8) comprenant une turbine (4) et un compresseur (8) d'air intégré dans la ligne d'admission (11) d'air, la ligne d'admission (11) comprenant aussi un compresseur auxiliaire (9) de surpression d'air avec une branche (12) de la ligne (11) montée en dérivation du compresseur auxiliaire (9), le groupe motopropulseur mettant en œuvre un procédé selon l'une quelconque des revendications précédentes en comprenant une unité de commande pilotant un arrêt ou une activation du compresseur auxiliaire (9), **caractérisé en ce que** l'unité de commande comprend des moyens de suivi d'une puissance du moteur, des moyens de mémorisation d'un seuil prédéterminé de puissance maximale et des moyens de comparaison de la puissance suivie avec le seuil prédéterminé de puissance maximale, des moyens de réception d'une commande d'augmentation de puissance émise par un conducteur du véhicule et des moyens de maintien en opération du compresseur auxiliaire (9) quand le seuil prédéterminé est dépassé et quand la commande est reçue.

5. Groupe motopropulseur selon la revendication précédente, dans lequel la branche de dérivation (12) part en amont d'une branche principale de ligne d'admission (11) intégrant le compresseur auxiliaire (9) et débouche en aval du compresseur auxiliaire (9), la branche de dérivation (12) comprenant une vanne de dérivation (13) ou un clapet anti-retour, la vanne de dérivation (13) étant pilotée par l'unité de commande.

6. Groupe motopropulseur selon l'une quelconque des deux revendications précédentes, dans lequel le compresseur auxiliaire (9) est positionné en amont ou en aval du compresseur (8) du turbocompresseur (4, 8) dans la ligne d'admission (11) d'air.

7. Groupe motopropulseur selon l'une quelconque des trois revendications précédentes, dans lequel le compresseur auxiliaire (9) est un compresseur électrique.

8. Véhicule automobile **caractérisé en ce qu'**il comprend un groupe motopropulseur selon l'une quelconque des revendications 4 à 7.

9. Véhicule automobile selon la revendication précédente, dans lequel l'unité de commande du groupe motopropulseur est reliée à un organe de sélection actionné par le conducteur du véhicule commandant une phase de suralimentation à pleine puissance sans maintien en opération du compresseur auxiliaire (9) ou une phase de suralimentation à pleine puissance et à conduite sportive avec maintien en opération du compresseur auxiliaire (9).

10. Véhicule automobile selon l'une quelconque des deux revendications précédentes, dans lequel, quand le compresseur auxiliaire (9) est un compresseur électrique, le compresseur électrique est alimenté électriquement en étant raccordé directement à une batterie présente dans le véhicule au moins pendant son maintien en opération, sous réserve que la batterie présente un niveau de charge supérieur à un seuil minimal déterminé par une unité de contrôle de la batterie communiquant avec l'unité de commande.

## Patentansprüche

1. Verfahren zum Reduzieren eines Druckabfalls in einer Lufteinlassleitung (11) einer Wärmekraftmaschine eines Antriebsstrangs eines Kraftfahrzeugs mit einem Kompressor (8) eines Turboladers (4, 8) und einem Hilfskompressor (9) in der Luftansaugleitung (11), wobei die Einheit einerseits in einer atmosphärischen Betriebsphase und andererseits in einer Aufladebetriebsphase arbeitet, in der sich der Turbolader (4, 8) und der Hilfskompressor (9) befinden aktiv, wenn eine Motordrehmomentanforderung ausgegeben wird, wobei der Hilfskompressor (9) gestoppt wird oder bei Leerlaufdrehzahl arbeitet, wenn eine vorbestimmte maximale Motorleistungsschwelle überschritten wird, wobei ein Luftstrom in der Ansaugleitung (11) dann hauptsächlich vom Hilfskompressor (11) umgangen wird 9), **dadurch gekennzeichnet, dass** auf Wunsch des Fahrers des Fahrzeugs das Kompressorhilfsmittel (9) in Betrieb gehalten wird, wenn die Vorschwelle überschritten wird. bestimmt, wobei der Luftstrom in der Ansaugleitung (11) hauptsächlich durch den Hilfskompressor (9) erfolgt.

2. Verfahren nach dem vorhergehenden Anspruch, bei dem die vorbestimmte Schwelle der maximalen Motorleistung durch eine Bedingung an einem Drehmomentsollwert definiert ist, der größer als eine Drehmomentsollwertschwelle sein muss, und eine Bedingung an einer Motordrehzahl, die größer als eine Motorschwelle sein muss Drehzahl, die Sollwerte für Drehmoment und Motordrehzahlsollwert werden kalibriert, eine Anforderung des Fahrers wird nicht ausgeführt, wenn diese beiden Bedingungen nicht erfüllt sind.

3. Verfahren nach einem der Ansprüche 1 oder 2, wobei, wenn der Hilfskompressor (9) in Betrieb gehalten wird , sich ein Gesamtluftstrom (Deb-Luft) in der Ansaugleitung (11) in 80% teilt, die durch den Hilfskompressor (9) strömen 9) und 20% Bypass des Hilfskompressors (9), während, wenn der Hilfskompressor (9) angehalten wird oder im Leerlauf läuft, der Gesamtluftstrom (Deb air) in der Ansaugleitung (11) unterteilt wird weniger als 20% passieren den Hilfskompressor (9) und mehr als 80% passieren den Bypass des Hilfskompressors (9).

4. Kraftfahrzeugantriebsstrang, umfassend einen thermischen Motor (1) mit einem Lufteinlass (2), in den eine Lufteinlassleitung (11) öffnet, der Antriebsstrang, umfassend einen Turbolader (4, 8) mit einer Turbine (4) und einen Luftkompressor (8) in die Luftansaugleitung (11) integriert ist, umfasst die Ansaugleitung (11) auch einen Hilfsluftverstärkungskompressor (9) mit einem Zweig (12) der Leitung (11), der als Bypass des Hilfskompressors (9) montiert ist. wobei der Antriebsstrang ein Verfahren gemäß einem der vorhergehenden Ansprüche implementiert, einschließlich einer Steuereinheit, die ein Anhalten oder Aktivieren des Hilfskompressors (9) steuert, **gekennzeichnet dadurch, dass** die Steuereinheit Mittel zum Überwachen der Motorleistung, Mittel zum Speichern eines vorbestimmten Maximums umfasst Leistungsschwelle und Mittel zum Vergleichen der überwachten Leistung mit der vorgegebenen Schwelle der maximalen Leistung, und Mittel zum Empfangen eines Leistungserhöhungsbefehls, der von einem Fahrer des Fahrzeugs ausgegeben wird, und Mittel zum Halten des Hilfskompressors (9) in Betrieb, wenn der vorbestimmte Schwellenwert überschritten wird und wenn der Befehl empfangen wird.

5. Antriebsstrang nach dem vorhergehenden Anspruch, wobei der Bypass-Zweig (12) stromaufwärts eines Hauptzweigs der Ansaugleitung (11) beginnt, der den Hilfskompressor (9) integriert, und sich stromabwärts des Hilfskompressors (9), des Bypass-Zweigs (12) öffnet) umfassend ein Bypassventil (13) oder ein Rückschlagventil, wobei das Bypassventil (13) von der Steuereinheit gesteuert wird.

6. Antriebsstrang nach einem der beiden vorhergehenden Ansprüche, wobei der Hilfskompressor (9) stromaufwärts oder stromabwärts des Kompressors (8) des Turboladers (4, 8) in der Ansaugleitung (11) von Luft positioniert ist.

7. Antriebsstrang nach einem der drei vorhergehenden Ansprüche, wobei der Hilfskompressor (9) ein elektrischer Kompressor ist.

8. Kraftfahrzeug, das **dadurch gekennzeichnet ist, dass** es einen Antriebsstrang nach einem der Ansprüche 4 bis 7 umfasst.

9. Kraftfahrzeug nach dem vorhergehenden Anspruch, bei dem die Antriebseinheit-Steuereinheit mit einem Auswahlelement verbunden ist, das vom Fahrer des Fahrzeugs betätigt wird, das eine Ladephase bei voller Leistung steuert, ohne den Hilfskompressor (9) in Betrieb zu halten oder eine Ladephase bei volle Leistung und sportliches Fahren mit Wartung des Hilfskompressors (9).

10. Kraftfahrzeug nach einem der beiden vorhergehenden Ansprüche, bei dem, wenn der Hilfskompressor (9) ein elektrischer Kompressor ist, der elektrische Kompressor elektrisch versorgt wird, indem er zumindest während des Betriebs direkt an eine im Fahrzeug vorhandene Batterie angeschlossen wird in Betrieb gehalten. Betrieb, vorausgesetzt, die Batterie hat einen Ladezustand, der größer als ein Mindestschwellenwert ist, der von einer mit der Steuereinheit kommunizierenden Batteriesteuereinheit bestimmt wird.

## Claims

1. Method of reducing a pressure drop in an air intake line (11) of a heat engine of a power train of a motor vehicle having a compressor (8) of a turbocharger (4, 8) ) and an auxiliary compressor (9) in the air intake line (11), the unit operating, on the one hand, in an atmospheric operating phase and, on the other hand, in a supercharging operating phase in which the turbocharger (4, 8) and the auxiliary compressor (9) are active when an engine torque request is issued, the auxiliary compressor (9) being stopped or operating at idle speed when exceeding a predetermined maximum engine power threshold, an air flow in the intake line (11) then being mainly bypassed from the auxiliary compressor (9), **characterized in that**, at the request of the driver of the vehicle, the compressor auxiliary (9) is kept in operation when the threshold is exceeded predetermined, the air flow in the intake line (11) being mainly through the auxiliary compressor (9).

2. Method according to the preceding claim, in which the predetermined threshold of maximum engine power is defined by a condition on a torque setpoint which must be greater than a torque setpoint threshold and a condition on an engine speed which must be greater than a threshold of engine speed, the torque and engine speed setpoint thresholds being calibrated, a request from the driver not being executed if these two conditions are not met.

3. Method according to any one of claims 1 or 2, wherein when the auxiliary compressor (9) is kept in operation, a total air flow (Deb air) in the intake line (11) divides into 80 % passing through the auxiliary compressor (9) and 20% passing by bypass of the auxiliary compressor (9) while, when the auxiliary compressor (9) is stopped or running at idle speed, the total air flow (Deb air) in the intake line (11) is divided into less than 20% passing through the auxiliary compressor (9) and more than 80% passing by bypass of the auxiliary compressor (9).

4. Motor vehicle powertrain comprising a thermal engine (1) with an air inlet (2) into which an air intake line (11) opens, the powertrain comprising a turbocharger (4, 8) comprising a turbine (4) and an air compressor (8) integrated in the air intake line (11), the intake line (11) also comprising an auxiliary air boost compressor (9) with a branch (12) of the line (11) mounted as a bypass of the auxiliary compressor (9), the powertrain implementing a method according to any one of the preceding claims including a control unit controlling a stopping or activation of the auxiliary compressor (9), **characterized in that** the control unit comprises means for monitoring engine power, means for storing a predetermined maximum power threshold and means for comparing the monitored power with the predetermined threshold maximum power, means for receiving a power increase command issued by a driver of the vehicle and means for keeping the auxiliary compressor (9) in operation when the predetermined threshold is exceeded and when the command is received.

5. Powertrain according to the preceding claim, wherein the bypass branch (12) starts upstream of a main branch of the intake line (11) integrating the auxiliary compressor (9) and opens downstream of the auxiliary compressor (9), the bypass branch (12) comprising a bypass valve (13) or a non-return valve, the bypass valve (13) being controlled by the control unit.

6. Powertrain according to any of the two preceding claims, wherein the auxiliary compressor (9) is positioned upstream or downstream of the compressor (8) of the turbocharger (4, 8) in the intake line (11) of air.

7. Powertrain according to any one of the three preceding claims, wherein the auxiliary compressor (9) is an electric compressor.

8. Motor vehicle **characterized in that** it comprises a powertrain according to any one of claims 4 to 7.

9. Motor vehicle according to the preceding claim, in which the drive unit control unit is connected to a selection member actuated by the driver of the vehicle controlling a supercharging phase at full power without keeping the auxiliary compressor (9) in operation or a supercharging phase at full power and sporty driving with maintenance of the auxiliary compressor (9).

10. Motor vehicle according to any one of the two preceding claims, in which, when the auxiliary compressor (9) is an electric compressor, the electric compressor is supplied electrically by being connected directly to a battery present in the vehicle at least while it is being kept in operation. operation, provided that the battery has a charge level greater than a minimum threshold determined by a battery control unit communicating with the control unit.
